# EUROPEAN PATENT APPLICATION

(11) **EP 4 596 087 A1**
(43) Date of publication of application: **06.08.2025**
(21) Application number: 23872215.1
(22) Date of filing: 22.09.2023
(51) Int. Cl.: B01D 53/22

(54) **GAS SEPARATION SYSTEM**

(30) Priority: 27.09.2022 JP 2022154213
(71) Applicant: Nitto Denko Corporation, Osaka 567-8680 (JP)
(72) Inventor: KATAGIRI, Makoto, Ibaraki-shi Osaka 567-8680 (JP); NEZAKI, Motonobu, Ibaraki-shi Osaka 567-8680 (JP); YASUDA, Hironori, Ibaraki-shi Osaka 567-8680 (JP); FUKUMURA, Takuya, Ibaraki-shi Osaka 567-8680 (JP); IHARA, Terukazu, Ibaraki-shi Osaka 567-8680 (JP)
(74) Representative: Hoffmann Eitle
(86) International application number: PCT/JP2023/034609
(87) International publication number: WO 2024/070990

(57) **Abstract**

The present invention provides a novel gas separation system suitable for reducing recovery power. A gas separation system 100 includes: a combustion device 10 that is supplied with a first gas G₁ containing oxygen and that discharges a second gas G₂ containing carbon dioxide; a second gas circulation passage 64 for feeding at least a portion of the second gas G₂ to the combustion device 10; and a gas separation device 20 that separates the second gas G₂ to obtain a third gas G₃ having a higher content of carbon dioxide than the second gas G₂.

## Description

### TECHNICAL FIELD

The present invention relates to a gas separation system.

### BACKGROUND ART

In recent years, technologies for separating and recovering carbon dioxide contained in exhaust gases discharged from combustion devices such as boilers have been attracting attention. For example, Patent Literature 1 proposes a technique in which exhaust gas from a boiler is separated using a decompression-type membrane separation unit to remove CO₂ and SO₂ from the exhaust gas.

### CITATION LIST

### Patent Literature

Patent Literature 1: JP 2020-501884 A

### SUMMARY OF INVENTION

### Technical Problem

The system described in Patent Literature 1 employs a decompression-type membrane separation unit in order to separate exhaust gas from a boiler. The system configuration of Patent Literature 1 requires a high recovery power for separating carbon dioxide.

The present invention aims to provide a novel gas separation system suitable for reducing recovery power.

### Solution to Problem

The present invention provides a gas separation system including:
a combustion device that is supplied with a first gas containing oxygen and that discharges a second gas containing carbon dioxide;
a second gas circulation passage for feeding at least a portion of the second gas to the combustion device; and
a gas separation device that separates the second gas to obtain a third gas having a higher content of carbon dioxide than the second gas.

### Advantageous Effects of Invention

The present invention can provide a novel gas separation system suitable for reducing recovery power.

### BRIEF DESCRIPTION OF DRAWINGS

FIG. 1 is a schematic configuration diagram showing an example of a gas separation system of the present embodiment.
FIG. 2 is a schematic cross-sectional view showing an example of a gas separation device included in the gas separation system.
FIG. 3 is a schematic cross-sectional view showing an example of a separation membrane included in the gas separation device.
FIG. 4 is a developed perspective view showing a modification of the gas separation device included in the gas separation system.
FIG. 5 is a schematic configuration diagram showing a gas separation system used in Calculation Example 6.
FIG. 6 is a schematic configuration diagram showing a gas separation system used in Calculation Example 7.
FIG. 7 is a graph showing the relationship between the recovery power for carbon dioxide and the content of carbon dioxide in a second gas, based on simulation results of Calculation Examples 1 to 5.

### DESCRIPTION OF EMBODIMENTS

A gas separation system according to a first aspect of the present invention includes:
a combustion device that is supplied with a first gas containing oxygen and that discharges a second gas containing carbon dioxide;
a second gas circulation passage for feeding at least a portion of the second gas to the combustion device; and
a gas separation device that separates the second gas to obtain a third gas having a higher content of carbon dioxide than the second gas.

In a second aspect of the present invention, for example, in the gas separation system according to the first aspect, the gas separation device includes a separation membrane that separates the second gas.

In a third aspect of the present invention, for example, in the gas separation system according to the first or second aspect, the combustion device includes a boiler.

In a fourth aspect of the present invention, for example, in the gas separation system according to any one of the first to third aspects, the content of carbon dioxide in the second gas is 20 vol% or more.

In a fifth aspect of the present invention, for example, in the gas separation system according to the fourth aspect, the content of carbon dioxide in the second gas is 70 vol% or less.

In a sixth aspect of the present invention, for example, in the gas separation system according to any one of the first to fifth aspects, a content of oxygen in the first gas is 20 vol% or more.

In a seventh aspect of the present invention, for example, the gas separation system according to any one of the first to the sixth aspects further includes a pressurization device that pressurizes the second gas.

In an eighth aspect of the present invention, for example, the gas separation system according to any one of the first to seventh aspects further includes a gas supply unit that supplies the first gas to the combustion device.

In a ninth aspect of the present invention, for example, in the gas separation system according to the eighth aspect, the gas supply unit includes a gas generation device that generates the first gas from air.

The present invention is described in detail below. The following description is not intended to limit the present invention to a specific embodiment.

### <Embodiment of Gas Separation System>

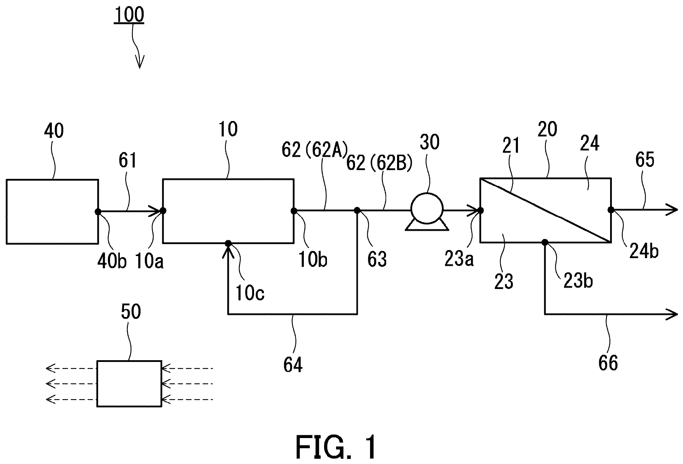

FIG. 1 is a schematic configuration diagram showing an example of a gas separation system 100 of the present embodiment. The gas separation system 100 includes a combustion device 10, a gas separation device 20, and a second gas circulation passage 64. The combustion device 10 is supplied with a first gas G₁ containing oxygen. The combustion device 10 discharges a second gas G₂ containing carbon dioxide. The second gas circulation passage 64 is a passage for feeding at least a portion of the second gas G₂ to the combustion device 10. The gas separation device 20 is a device that separates the second gas G₂ to obtain a third gas G₃ having a higher content of carbon dioxide than the second gas G₂.

The gas separation device 20 may be any device that can separate the second gas G₂ to obtain the third gas G₃ having a higher content of carbon dioxide than the second gas G₂. For example, the gas separation device 20 may employ a membrane separation method that uses a separation membrane to separate the second gas G₂ thus to obtain the third gas G₃, or may employ a physical adsorption method that uses an adsorbent to separate the second gas G₂ thus to obtain the third gas G₃. Examples of physical adsorption methods include the pressure swing adsorption (PSA) method, the temperature swing adsorption (TSA) method, and the pressure and temperature swing adsorption (PTSA) method. The PSA method, the TSA method, and the PTSA method are methods in which gas is separated using an adsorbent that is composed of a chemical adsorption component such as potassium carbonate or an amine carried on a carrier such as activated carbon or a porous resin. The PSA method performs gas separation by utilizing differences in the adsorption ability of the adsorbent caused by pressure changes. The TSA method performs gas separation by utilizing differences in the adsorption ability of the adsorbent caused by temperature changes. The PTSA method performs gas separation by utilizing differences in the adsorption ability of the adsorbent caused by pressure changes and temperature changes. In the case where the gas separation device 20 employs a physical adsorption method, the gas separation device 20 may employ the PSA method.

In the case where the gas separation device 20 employs a membrane separation method, the gas separation device 20 may include a separation membrane 21 that separates the second gas G₂. The separation membrane 21 can separate the second gas G₂, thereby obtaining the third gas G₃.

In the present specification, the term "combustion device" means a device that combusts fuel using fuel gas and discharges exhaust gas. The combustion device 10 is, for example, a boiler, an incinerator, or an internal combustion engine such as an engine. The combustion device 10 is typically a boiler.

In the gas separation system 100 of the present embodiment, the second gas circulation passage 64 enables at least a portion of the second gas G₂ to be fed to the combustion device 10. This can increase the content of carbon dioxide in the second gas G₂ to be supplied to the gas separation device 20 disposed downstream. Thus, according to the gas separation system 100 of the present embodiment, the gas separation device 20 can efficiently recover carbon dioxide present even in a region where the concentration of carbon dioxide is low (e.g., the content of carbon dioxide in exhaust gas is 10 vol% or less). Here, the separation power of the gas separation device tends to decrease as the content of carbon dioxide in exhaust gas to be supplied increases. Therefore, according to the gas separation system 100, the recovery power for carbon dioxide can be reduced. In the present specification, the term "recovery power for carbon dioxide" means the total power required to recover carbon dioxide. The recovery power of the gas separation system 100 for carbon dioxide includes the separation power of the gas separation device 20 per unit amount of carbon dioxide to be recovered.

The content of carbon dioxide in the second gas G₂ to be supplied to the gas separation device 20 is preferably 20 vol% or more. In the case where the content of carbon dioxide in the second gas G₂ is 20 vol% or more, the separation power of the gas separation device 20 can be reduced. In the present specification, the content (vol%) of carbon dioxide in the second gas G₂ is the volume ratio of carbon dioxide to the second gas G₂ under standard conditions (0°C and 101.33 kPa).

The lower limit for the content of carbon dioxide in the second gas G₂ to be supplied to the gas separation device 20 is preferably 25 vol%, and more preferably 30 vol%.

The content of carbon dioxide in the second gas G₂ to be supplied to the gas separation device 20 is preferably 70 vol% or less. In the case where the content of carbon dioxide in the second gas G₂ is 70 vol% or less, the separation power of the gas separation device 20 can be reduced more efficiently.

The content of carbon dioxide in the second gas G₂ to be supplied to the gas separation device 20 may be 65 vol% or less, 60 vol% or less, 55 vol% or less, or even 50 vol% or less.

### [Combustion Device]

The combustion device 10 combusts fuel using fuel gas and discharges the second gas G₂ as exhaust gas. The fuel gas is the first gas G₁ until at least a portion of the second gas G₂ is fed to the combustion device 10 through the second gas circulation passage 64. After at least a portion of the second gas G₂ is fed to the combustion device 10 through the second gas circulation passage 64, the fuel gas becomes a gas mixture G containing the first gas G₁ and the second gas G₂.

The fuel used in the combustion device 10 is not particularly limited. Examples of the fuel include liquid fuels such as petroleum, gaseous fuels such as natural gas, solid fuels such as coal and wood, and special fuel such as waste materials. The combustion device 10 may have connected thereto a fuel supply device (not shown) that supplies fuel.

The combustion device 10 may include a burner for combusting fuel, a fuel supply pipe for supplying fuel to the burner, and a fuel gas supply pipe for supplying the gas mixture G to the burner. In this case, the combustion device 10 combusts fuel using the gas mixture G supplied to the burner, thereby generating the second gas G₂ containing carbon dioxide.

The content of oxygen in the first gas G₁ to be supplied to the combustion device 10 is preferably 20 vol% or more. In the case where the content of oxygen in the first gas G₁ is 20 vol% or more, the content of carbon dioxide in the second gas G₂ to be discharged from the combustion device 10 can increase. Consequently, the separation power of the gas separation device 20 can be reduced. In the present specification, the content (vol%) of oxygen in the first gas G₁ is the volume ratio of oxygen to the first gas G₁ under standard conditions.

The lower limit for the content of oxygen in the first gas G₁ to be supplied to the combustion device 10 is preferably 25 vol%, and more preferably 30 vol%.

The upper limit for the content of oxygen in the first gas G₁ to be supplied to the combustion device 10 is not particularly limited. The upper limit for the content of oxygen in the first gas G₁ is, for example, 100 vol%. The content of oxygen in the first gas G₁ to be supplied to the combustion device 10 may be 90 vol% or less, 80 vol% or less, or even 70 vol% or less.

### [Gas Separation Device]

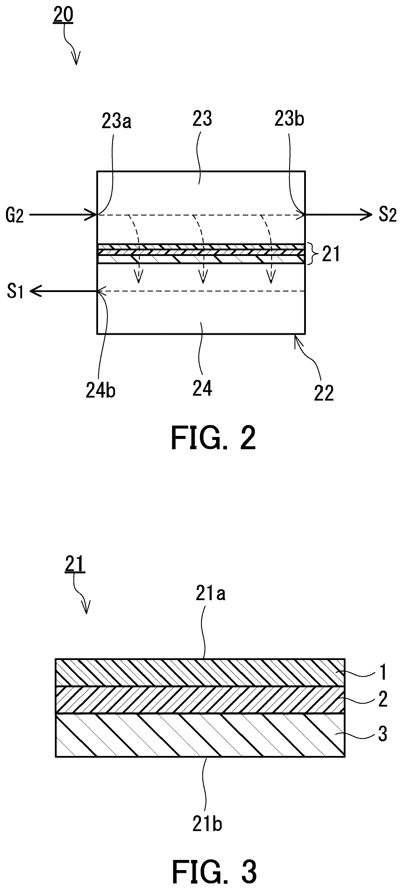

FIG. 2 is a schematic cross-sectional view showing an example of the gas separation device 20 included in the gas separation system 100. In the example in FIG. 2, the gas separation device 20 includes the separation membrane 21 that separates the second gas G₂ supplied. The third gas G₃ obtained using the separation membrane 21 has a higher content of carbon dioxide than the second gas G₂.

The separation membrane 21 included in the gas separation device 20 can be rephrased as the separation membrane 21 that separates the second gas G₂ into a permeated gas S₁ and a non-permeated gas S₂. The permeated gas S₁ may be the third gas G₃ or the non-permeated gas S₂ may be the third gas G₃.

As shown in FIG. 2, the gas separation device 20 includes the separation membrane 21 and a container 22. The container 22 includes a first chamber 23 and a second chamber 24. The first chamber 23 functions as a supply space to which the second gas G₂ is supplied. The second chamber 24 functions as a permeation space to which the permeated gas S₁ is supplied. The permeated gas S₁ is obtained by the permeation of the second gas G₂ through the separation membrane 21.

The separation membrane 21 is disposed inside the container 22. Inside the container 22, the separation membrane 21 separates the first chamber 23 and the second chamber 24 from each other. The separation membrane 21 extends from one of a pair of wall surfaces of the container 22 to the other.

The first chamber 23 has a supply space inlet 23a and a supply space outlet 23b. The second chamber 24 has a permeation space outlet 24b. The supply space inlet 23a is an opening for supplying the second gas G₂ to the supply space (first chamber 23). The permeation space outlet 24b is an opening for discharging the permeated gas S₁ from the permeation space (second chamber 24). The supply space outlet 23b is an opening for discharging, from the supply space (first chamber 23), the second gas G₂ that has not permeated through the separation membrane 21 (non-permeated gas S₂). The supply space inlet 23a, the supply space outlet 23b, and the permeation space outlet 24b are each formed, for example, in a wall surface of the container 22.

The gas separation device 20 is suitable for a flow-type (continuous-type) membrane separation method. However, the gas separation device 20 may be used for a batch-type membrane separation method.

The configuration of the separation membrane 21 is not particularly limited. FIG. 3 is a schematic cross-sectional view showing an example of the separation membrane 21 included in the gas separation device 20 shown in FIG. 2. As shown in FIG. 3, the separation membrane 21 may include a separation functional layer 1, a porous support member 3 supporting the separation functional layer 1, and an intermediate layer 2 disposed between the separation functional layer 1 and the porous support member 3. The intermediate layer 2, for example, is in direct contact with each of the separation functional layer 1 and the porous support member 3.

In a preferred embodiment of the present invention, the separation membrane 21 is a membrane permeable preferentially to carbon dioxide contained in the second gas G₂ (carbon dioxide separation membrane). In this case, the content of carbon dioxide in the permeated gas S₁ is higher than the content of carbon dioxide in the second gas G₂. On the other hand, the content of carbon dioxide in the non-permeated gas S₂ is lower than the content of carbon dioxide in the second gas G₂. That is, in the case where the separation membrane 21 is a carbon dioxide separation membrane, the permeated gas S₁ corresponds to the third gas G₃.

### (Separation Functional Layer)

In the case where the separation membrane 21 is a carbon dioxide separation membrane, the separation functional layer 1 is a layer permeable preferentially to carbon dioxide contained in the second gas G₂. The separation functional layer 1 preferably contains a resin. Examples of the resin contained in the separation functional layer 1 include a polyether block amide resin, a polyamide resin, a polyether resin, a polyimide resin, a polyetherimide resin, a cellulose acetate resin, a silicone resin, and a fluororesin. The separation functional layer 1 preferably contains a polyimide resin or a cellulose acetate resin, and more preferably contains a cellulose acetate resin. The separation functional layer 1 preferably consists substantially of a resin. In the present specification, the phrase "consist substantially of" means the exclusion of other components that alter the essential characteristics of the material referred to, and means, for example, that 95 wt% or more or even 99 wt% or more is composed of the material.

The thickness of the separation functional layer 1 is, for example, 50 µm or less, preferably 25 µm or less, and more preferably 15 µm or less. The thickness of the separation functional layer 1 may be 0.05 µm or more or 0.1 µm or more.

### (Intermediate Layer)

The intermediate layer 2 contains, for example, a resin and may further contain nanoparticles dispersed in the resin (matrix). The nanoparticles may be separated from each other or partially aggregate in the matrix. The material of the matrix is not particularly limited, and examples thereof include: a silicone resin such as polydimethylsiloxane; a fluororesin such as polytetrafluoroethylene; an epoxy resin such as polyethylene oxide; a polyimide resin; a polysulfone resin; a polyacetylene resin such as polytrimethylsilylpropyne or polydiphenylacetylene; and a polyolefin resin such as polymethylpentene. The matrix preferably contains a silicone resin.

The nanoparticles may contain an inorganic material or an organic material. The inorganic material contained in the nanoparticles is, for example, silica, titania, or alumina. The nanoparticles preferably contain silica.

The thickness of the intermediate layer 2 is not particularly limited and is, for example, less than 50 µm, preferably 40 µm or less, and more preferably 30 µm or less. The lower limit for the thickness of the intermediate layer 2 is not particularly limited and is, for example, 1 µm. The intermediate layer 2 is, for example, a layer having a thickness of less than 50 µm.

### (Porous Support Member)

The porous support member 3 supports the separation functional layer 1 via the intermediate layer 2. Examples of the porous support member 3 include: a nonwoven fabric; porous polytetrafluoroethylene; aromatic polyamide fiber; a porous metal; a sintered metal; porous ceramic; porous polyester; porous nylon; activated carbon fiber; latex; silicone; silicone rubber; a permeable (porous) polymer containing at least one selected from the group consisting of polyvinyl fluoride, polyvinylidene fluoride, polyurethane, polypropylene, polyethylene, polystyrene, polycarbonate, polysulfone, polyetheretherketone, polyacrylonitrile, polyimide, and polyphenylene oxide; a metallic foam having an open cell or a closed cell; a polymer foam having an open cell or a closed cell; silica; a porous glass; and a mesh screen. The porous support member 3 may be a combination of two or more of these materials.

The porous support member 3 has an average pore diameter of, for example, 0.01 to 0.4 µm. The thickness of the porous support member 3 is not particularly limited and is, for example, 10 µm or more, preferably 20 µm or more, and more preferably 50 µm or more. The thickness of the porous support member 3 is, for example, 300 µm or less, preferably 200 µm or less, and more preferably 150 µm or less.

The configuration of the separation membrane 21 is not limited to the example shown in FIG. 3. The separation membrane 21 may be composed of, for example, the separation functional layer 1 and the porous support member 3 disposed on one surface side of the separation functional layer 1 to support the separation functional layer 1. The separation membrane 21 may be composed of, for example, the separation functional layer 1, a protective layer disposed on one surface side of the separation functional layer 1 to protect the separation functional layer 1, and the porous support member 3 disposed on the other surface side of the separation functional layer 1 to support the separation functional layer 1. The protective layer can be a layer containing any of the materials described for the intermediate layer 2.

In another preferred embodiment of the present invention, the separation membrane 21 is a membrane permeable preferentially to nitrogen contained in the second gas G₂ (nitrogen separation membrane). In this case, the content of carbon dioxide in the permeated gas S₁ is lower than the content of carbon dioxide in the second gas G₂. On the other hand, the content of carbon dioxide in the non-permeated gas S₂ is higher than the content of carbon dioxide in the second gas G₂. That is, in the case where the separation membrane 21 is a nitrogen separation membrane, the non-permeated gas S₂ corresponds to the third gas G₃.

### (Separation Functional Layer)

In the case where the separation membrane 21 is a nitrogen separation membrane, the separation functional layer 1 is a layer permeable preferentially to nitrogen contained in the second gas G₂.

### (Intermediate Layer)

The intermediate layer 2 can be the one mentioned as the intermediate layer 2 for the case where the separation membrane 21 is a carbon dioxide separation membrane.

### (Porous Support Member)

The porous support member 3 can be the one mentioned as the porous support member 3 for the case where the separation membrane 21 is a carbon dioxide separation membrane.

### [Pressurization Device]

The gas separation system 100 may further include a pressurization device 30 that pressurizes the second gas G₂. In the case where the gas separation system 100 includes the pressurization device 30, the pressurization device 30 may be disposed upstream of the gas separation device 20 to pressurize the supply space 23 of the gas separation device 20.

As described above, the separation power of the gas separation device tends to decrease as the content of carbon dioxide in exhaust gas to be supplied increases. On the other hand, when comparing the operation method that generates a pressure difference by decompression from the permeation side of the gas separation device (decompression method) with the operation method that generates a pressure difference by pressurization from the supply side of the gas separation device (pressurization method), there is a tendency that the lower the content of carbon dioxide in exhaust gas to be supplied, the greater the difference therebetween in the required separation power. For example, the separation power required for exhaust gas having a content of carbon dioxide of 10 vol% is 1.06 MWh/t-CO₂ for the decompression method, whereas the required separation power is 1.92 MWh/t-CO₂ for the pressurization method, showing a difference of nearly twofold. Accordingly, from the perspective of running costs, gas separation devices for processing exhaust gas having a content of carbon dioxide of 10 vol% or less, such as exhaust gas discharged from boilers, have conventionally employed the decompression method.

The present inventors have found that the above-described difference in the separation power tends to diminish as the content of carbon dioxide in exhaust gas to be supplied to the gas separation device increases. For example, the separation power required for exhaust gas having a content of carbon dioxide of 50 vol% is 0.16 MWh/t-CO₂ for both the decompression method and the pressurization method. Based on this finding, the present inventors have conceived of the idea of employing the pressurization method for the gas separation device 20 in the gas separation system 100 of the present embodiment. The pressurization method requires less membrane area than the decompression method. Consequently, by employing the pressurization method for the gas separation device 20 in the gas separation system 100 of the present embodiment, it is possible to significantly reduce the required membrane area while suppressing the increase in separation power. Therefore, the overall system can be made compact.

The pressurization device 30 may be a pump that pumps the second gas G₂ toward the supply space 23 of the gas separation device 20. The pump is typically a gas transport pump, and examples thereof include reciprocating pumps and rotary pumps. Examples of reciprocating pumps include diaphragm pumps and rocking piston pumps. Examples of rotary pumps include: liquid seal pumps; oil rotary pumps (rotary pumps); mechanical booster pumps; and various types of dry pumps such as roots, claw, screw, turbo, and scroll dry pumps. The pump serving as the pressurization device 30 may include a variable speed mechanism for changing, for example, a rotational speed. An example of the variable speed mechanism is an inverter that drives a motor of the pump. By controlling, for example, the rotational speed of the pump using the variable speed mechanism, it is possible to appropriately adjust the pressure in the supply space 23 of the gas separation device 20.

### [Gas Supply Unit]

The gas separation system 100 may further include a gas supply unit 40 that supplies the first gas G₁ to the combustion device 10. In the case where the gas separation system 100 includes the gas supply unit 40, the gas supply unit 40 may be connected to the combustion device 10.

The gas supply unit 40 may be a tank or cylinder that stores the first gas G₁. Such a tank or cylinder may be connected to the combustion device 10.

The gas supply unit 40 may include a gas generation device that generates the first gas G₁ from air. The gas generation device may be connected to the combustion device 10. The gas supply unit 40 may be configured such that the first gas G₁ generated by the gas generation device is stored in the gas tank or gas cylinder described above. The configuration of the gas generation device is not particularly limited as long as the gas generation device can generate the first gas G₁ from air. The gas generation device generates the first gas G₁ containing oxygen, for example, by separating oxygen from air. The gas generation device may generate the first gas G₁ containing oxygen by separating air into oxygen and an inert gas such as nitrogen. The content of oxygen in the first gas G₁ generated by the gas generation device is, for example, 20 vol% or more.

The gas generation device may employ the pressure swing adsorption (PSA) method or the pressure vacuum swing adsorption (PVSA) method. Employing the PSA method enables the gas generation device to become compact compared to employing the PVSA method, reducing the installation area. Employing the PVSA method can reduce the running costs compared to employing the PVSA method. The gas generation device may separate oxygen from air using a separation membrane. The separation membrane for the gas generation device can be, for example, the separation membrane 21 of the gas separation device 20.

### [Gas Passages]

In addition to the second gas circulation passage 64, the gas separation system 100 may further include, as the gas passages, a first gas supply passage 61, the second gas circulation passage 64, a permeated gas discharge passage 65, and a non-permeated gas discharge passage 66.

The first gas supply passage 61 is a passage for supplying the first gas G₁ from the gas supply unit 40 to the combustion device 10 during operation and is connected to an outlet 40b of the gas supply unit 40 and a first gas inlet 10a of the combustion device 10. A second gas supply passage 62 is a passage for supplying the second gas G₂ from the combustion device 10 to the gas separation device 20 during operation and is connected to a second gas outlet 10b of the combustion device 10 and the supply space inlet 23a of the gas separation device 20.

In the example in FIG. 1, the second gas supply passage 62 has a first portion 62A and a second portion 62B. The first portion 62A is a portion connecting the second gas outlet 10b of the combustion device 10 and a branching point 63 to each other, whereas the second portion 62B is a portion connecting the branching point 63 and the supply space inlet 23a of the gas separation device 20 to each other. In the example in FIG. 1, the second gas circulation passage 64 is branched from the second gas supply passage 62 at the branching point 63 and is connected to a second gas inlet 10c of the combustion device 10. However, the connection point of the second gas circulation passage 64 is not limited to the example shown in FIG. 1. For example, the second gas circulation passage 64 may be branched from the second gas outlet 10b of the combustion device 10 to be connected to the second gas inlet 10c of the combustion device 10.

The second gas circulation passage 64 is a passage for feeding at least a portion of the second gas G₂ discharged from the combustion device 10 to the combustion device 10 during operation. That is, the gas separation system 100 is configured such that, during operation, the second gas G₂ is mixed with the first gas G₁ in the combustion device 10 and circulates through the first portion 62A of the second gas supply passage 62 and the second gas circulation passage 64. By circulating at least a portion of the second gas G₂ to the combustion device 10, it is possible to increase the content of carbon dioxide in the second gas G₂ to be supplied to the gas separation device 20. The content of carbon dioxide in the second gas G₂ to be supplied to the gas separation device 20 is, for example, 20 vol% or more and 70 vol% or less.

The permeated gas discharge passage 65 is a passage for discharging the permeated gas S₁ from the gas separation device 20 during operation and is connected to the permeation space outlet 24b of the gas separation device 20. In the permeated gas discharge passage 65, a pump may be disposed to control the flow rate of the permeated gas S₁, for example. The non-permeated gas discharge passage 66 is a passage for discharging the non-permeated gas S₂ from the gas separation device 20 during operation and is connected to the supply space outlet 23b of the gas separation device 20. In the non-permeated gas discharge passage 66, a pump may be disposed to control the flow rate of the non-permeated gas S₂, for example.

In the example in FIG. 1, the pressurization device 30 is disposed in the second portion 62B of the second gas supply passage 62. The pressurization device 30 can pressurize the supply space 23 of the gas separation device 20.

In the second gas circulation passage 64, a pressurization device (not shown) may be disposed. By disposing a pressurization device in the second gas circulation passage 64, it is possible to pressurize the second gas G₂ that is to be circulated to the combustion device 10.

The gas passages in the gas separation system 100 are each composed of, for example, piping made of metal or resin, unless otherwise specified.

The gas separation system 100 may further include a control device 50 that controls the members of the gas separation system 100. The control device 50 is, for example, a digital signal processor (DSP) including an A/D conversion circuit, an input/output circuit, an arithmetic circuit, a storage device, and the like. The control device 50 stores a program for appropriately operating the gas separation system 100. For example, the control device 50 may control the operation of the pressurization device 30 to adjust the pressure in the supply space 23 of the gas separation device 20, thereby pressurizing the second gas G₂.

In the present embodiment, the content of carbon dioxide in the third gas G₃ (permeated gas S₁ or non-permeated gas S₂) obtained by the gas separation system 100 is, for example, 95 vol% or more. Thus, by using the gas separation system 100, it is possible to recover high-purity carbon dioxide.

The gas separation system 100 may further include a recovery portion (not shown) that recovers carbon dioxide separated by the gas separation device 20. The configuration of the recovery portion is not particularly limited. In the case where the separation membrane 21 of the gas separation device 20 is a carbon dioxide separation membrane, the permeated gas discharge passage 65 is connected to the inlet of the recovery portion. In the case where the separation membrane 21 of the gas separation device 20 is a nitrogen separation membrane, the non-permeated gas discharge passage 66 is connected to the inlet of the recovery portion.

The recovery portion may include a liquefaction portion that liquefies the third gas G₃. That is, the recovery portion may liquefy carbon dioxide separated by the gas separation device 20 to recover the carbon dioxide in a liquid state.

The recovery portion may include a solidification portion that solidifies the third gas G₃. That is, the recovery portion may solidify carbon dioxide separated by the gas separation device 20 to recover the carbon dioxide in a solid (dry ice) state.

The use form of carbon dioxide recovered using the gas separation system 100 of the present embodiment is not particularly limited. For example, carbon dioxide recovered in a liquid state by the recovery portion may be extracted from the recovery portion and used while remaining in the liquid state. Carbon dioxide recovered in a gaseous state by the recovery portion may be extracted from the recovery portion and used while remaining in the gaseous state. Carbon dioxide recovered in a solid state by the recovery portion may be extracted from the recovery portion and used while remaining in the solid (dry ice) state. The recovered carbon dioxide may be reused as a carbon resource (carbon compound).

### <Embodiment of Operating Method for Gas Separation System>

An operating method for the gas separation system 100 includes: supplying the first gas G₁ containing oxygen to the combustion device 10 and discharging the second gas G₂ containing carbon dioxide from the combustion device 10 (Step ST1); feeding at least a portion of the second gas G₂ through the second gas circulation passage 64 to the combustion device 10 (Step ST2); and separating the second gas G₂ by the gas separation device 20 to obtain the third gas G₃ having a higher content of carbon dioxide than the second gas G₂ (Step ST3).

In Step ST1, the first gas G₁ is initially supplied to the combustion device 10. The content of oxygen in the first gas G₁ is, for example, 20 vol% or more. The second gas G₂ containing carbon dioxide is generated by combustion of fuel in the combustion device 10. The second gas G₂ generated is discharged from the combustion device 10.

In Step ST2, at least a portion of the second gas G₂ discharged from the combustion device 10 is fed to the combustion device 10. This can increase the content of carbon dioxide in the second gas G₂ to be supplied to the gas separation device 20. The content of carbon dioxide in the second gas G₂ to be supplied to the gas separation device 20 is, for example, 20 vol% or more and 70 vol% or less.

In Step ST3, the second gas G₂ is separated by the gas separation device 20 to obtain the third gas G₃. In the case where the gas separation device 20 includes the separation membrane 21, the separation membrane 21 can separate the second gas G₂, thereby obtaining the third gas G₃. A specific method of performing Step ST3 is described with reference to FIGS. 2 and 3, using an example case where the gas separation device 20 includes the separation membrane 21 and the separation membrane 21 is a carbon dioxide separation membrane. In Step ST3, the second gas G₂ is initially supplied through the supply space inlet 23a to the supply space 23 of the gas separation device 20. This can bring the second gas G₂ into contact with one surface (e.g., principal surface 21a) of the separation membrane 21.

Next, it is preferable to pressurize the space adjacent to the one surface of the separation membrane 21 in a state in which the second gas G₂ is in contact with the one surface of the separation membrane 21. That is, Step ST3 preferably includes pressurizing the second gas G₂ by the pressurization device 30. In detail, the pressurization device 30 pressurizes the supply space 23 through the supply space inlet 23a. The pressure in the supply space 23 is, for example, 200 kPa or more, and may be 400 kPa or more, 600 kPa or more, 800 kPa or more, 1000 kPa or more, or even 1500 kPa or more. The pressure in the supply space 23 is preferably in the range of 300 kPa to 900 kPa.

By pressurizing the supply space 23 by the pressurization device 30, the third gas G₃, namely, the permeated gas S₁ having a high content of carbon dioxide, can be obtained on the other surface (e.g., principal surface 21b) side of the separation membrane 21. That is, the permeated gas S₁ is supplied to the permeation space 24. The permeated gas S₁ is discharged through the permeation space outlet 24b to the outside of the gas separation device 20.

On the other hand, the content of carbon dioxide in the second gas G₂ gradually decreases from the supply space inlet 23a toward the supply space outlet 23b of the supply space 23. The second gas G₂ processed in the supply space 23, namely, the non-permeated gas S₂, is discharged through the supply space outlet 23b to the outside of the gas separation device 20.

In Step ST3, the carbon dioxide contained in the second gas G₂ can be allowed to preferentially permeate through the separation membrane 21 of the gas separation device 20. Consequently, the permeated gas S₁ obtained through the operation of the gas separation device 20 has a higher content of carbon dioxide than the second gas G₂ supplied to the gas separation device 20. The ratio of the content (wt%) of carbon dioxide in the permeated gas S₁ to the content (wt%) of carbon dioxide in the second gas G₂ supplied to the gas separation device 20 is not particularly limited.

According to Step ST3, for example, the third gas G₃, namely, the permeated gas S₁ having a high content of carbon dioxide, can be produced. That is, Step ST3 enables carbon dioxide to be obtained as the permeated gas S₁.

The operating method for the gas separation system 100 may further include recovering carbon dioxide by the recovery portion (Step ST4). Step ST4 may include liquefying the third gas G₃ by the liquefaction portion. That is, Step ST4 may include liquefying the carbon dioxide separated by the gas separation device 20 to recover the carbon dioxide in a liquid state. Step ST4 may include storing the third gas G₃ by a storage portion. That is, Step ST4 may include recovering the carbon dioxide, separated by the gas separation device 20, remaining in a gaseous state. The storage portion is, for example, a tank or cylinder that stores carbon dioxide. The tank or cylinder may include, as an adsorbent, for example, a porous material such as activated carbon, zeolite, or a metal-organic framework (MOF). Step ST4 may include solidifying the third gas G₃ by the solidification portion. That is, Step ST4 may include solidifying the carbon dioxide separated by the gas separation device 20 to recover the carbon dioxide in a solid (dry ice) state.

The use form of the carbon dioxide recovered in Step ST4 is not particularly limited. For example, carbon dioxide recovered in a liquid state may be used while remaining in the liquid state. Carbon dioxide recovered in a gaseous state may be used while remaining in the gaseous state. Carbon dioxide recovered in a solid state may be used while remaining in the solid (dry ice) state. The recovered carbon dioxide may be reused as a carbon resource (carbon compound).

According to the operating method for the gas separation system 100 of the present embodiment, the recovery power for carbon dioxide can be reduced.

### [Modification of Gas Separation Device]

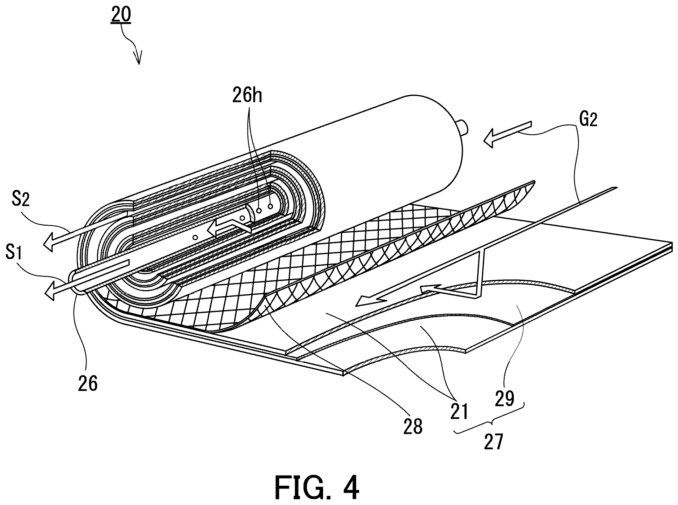

In the case where the gas separation device 20 includes the separation membrane 21, the gas separation device 20 may be a spiral membrane element, a hollow fiber membrane element, a disk-tube membrane element with multiple pervaporation membranes stacked on each other, a plate-and-frame membrane element, or the like. FIG. 4 is a developed perspective view schematically showing a spiral membrane element. The gas separation device 20 may be a spiral membrane element as shown in FIG. 4. The gas separation device 20 (membrane element) in FIG. 4 includes a central tube 26 and a membrane leaf 27 wound around the central tube 26. The membrane leaf 27 includes the separation membrane 21.

The central tube 26 has a cylindrical shape. The central tube 26 has a surface with a through hole 26h to allow the permeated gas S₁ to flow into the central tube 26. The number of the through holes 26h is not particularly limited and may be one or may be two or more. Examples of a material of the central tube 26 include: a resin such as an acrylonitrile-butadiene-styrene copolymer resin (ABS resin), a polyphenylene ether resin (PPE resin), or a polysulfone resin (PSF resin); and a metal such as stainless steel or titanium. The central tube 26 has an inner diameter in a range of, for example, 20 to 100 mm.

The gas separation device 20 includes a plurality of the membrane leaves 27. The membrane leaves 27 each include the separation membrane 21 and a permeation-side flow passage material 29. For example, the membrane leaf 27 includes two pieces of the separation membranes 21. The two separation membranes 21 are stacked on each other and sealed along three sides to form a bag-like structure. The permeation-side flow passage material 29 is disposed between the two separation membranes 21 to be positioned inside the bag-like structure. The permeation-side flow passage material 29 ensures, between the two separation membranes 21, a space serving as the flow passage for the permeated gas S₁ (permeation space). Thus, the permeation-side flow passage material 29 is used in combination with the separation membrane 21. The number of the membrane leaves 27 is not particularly limited and is, for example, 2 to 30.

The gas separation device 20 further includes a supply-side flow passage material 28. The supply-side flow passage material 28 is positioned outside the bag-like structure described above and is stacked on the membrane leaf 27. In detail, a plurality of the supply-side flow passage materials 28 and the plurality of membrane leaves 27 are alternately stacked. The supply-side flow passage material 28 ensures, between the membrane leaves 27, a space serving as the flow passage for the second gas G₂ (supply space).

The supply-side flow passage material 28 and the permeation-side flow passage material 29 can be, for example, a resin net, woven fabric, or knitted fabric made of polyethylene, polypropylene, polyethylene terephthalate (PET), polyphenylene sulfide (PPS), or an ethylene-chlorotrifluoroethylene copolymer (ECTFE).

The outer peripheral surface of the membrane element is composed of a shell (not shown) made of a gas-impermeable material. The shell may be made of fiber-reinforced plastic (FRP). The membrane element may be housed in a casing (not shown).

The gas separation device 20 (membrane element) in FIG. 4 can be operated, for example, by the following method. First, the second gas G₂ is supplied to one end of the wound membrane leaf 27. The space in which the membrane leaf 27 is placed is pressurized. The pressurization can be performed by the pressurization device 30. This causes the permeated gas S₁ that has permeated through the separation membrane 21 of the membrane leaf 27 to move into the central tube 26. The permeated gas S₁ is discharged through the central tube 26 to the outside. The non-permeated gas S₂ processed by the gas separation device 20 is discharged through the other end of the wound membrane leaf 27 to the outside.

The above descriptions of the embodiments can be applied to one another unless they are technically contradictory. Furthermore, the embodiments and modifications described above may be combined with one another unless they are technically contradictory.

### Examples

The present invention is described in more detail below by way of calculation examples; however, the present invention is not limited to these examples.

### (Calculation Example 1)

A simulation was performed on the operation of the gas separation system 100 shown in FIG. 1, using a carbon dioxide separation membrane having a CO₂ permeation rate of 800 GPU, a N₂ permeation rate of 26.6 GPU, and a separation factor α of 30. In detail, in the gas separation system 100, it was assumed that the above carbon dioxide separation membrane would be used as the separation membrane included in the gas separation device 20. The gas separation system 100 included the combustion device 10, the gas separation device 20, the pressurization device 30, and the like.

In the operation of the gas separation device 20 in Calculation Example 1, it was assumed that: a content of carbon dioxide of 20 vol% in the second gas G₂ to be supplied to the gas separation device 20 would be achieved by supplying the first gas G₁ from the gas supply unit 40 to the combustion device 10 and by feeding a portion of the second gas G₂ through the second gas circulation passage 64 to the combustion device 10; and the supply space 23 of the gas separation device 20 would be pressurized by the pressurization device 30.

For Calculation Example 1, the recovery power for carbon dioxide (MWh/t-CO₂) and the required number of membranes were calculated under the following hypothetical conditions. The calculations were performed using Symmetry, process modeling software manufactured by Schlumberger Ltd.

### <Hypothetical Conditions>

The content of carbon dioxide in the third gas G₃ (permeated gas S₁) discharged from the gas separation device 20 is 95 vol%.

The recovery rate of carbon dioxide by the gas separation system 100 is 90 wt%.

### (Calculation Example 2)

The recovery power for carbon dioxide and the required number of membranes were calculated under the same conditions as those in Calculation Example 1, except that the content of carbon dioxide in the second gas G₂ to be supplied to the gas separation device 20 was assumed to be 25 vol%.

### (Calculation Example 3)

The recovery power for carbon dioxide and the required number of membranes were calculated under the same conditions as those in Calculation Example 1, except that the content of carbon dioxide in the second gas G₂ to be supplied to the gas separation device 20 was assumed to be 33 vol%.

### (Calculation Example 4)

The recovery power for carbon dioxide and the required number of membranes were calculated under the same conditions as those in Calculation Example 1, except that the content of carbon dioxide in the second gas G₂ to be supplied to the gas separation device 20 was assumed to be 50 vol%.

### (Calculation Example 5)

The recovery power for carbon dioxide and the required number of membranes were calculated under the same conditions as those in Calculation Example 1, except that the content of carbon dioxide in the second gas G₂ to be supplied to the gas separation device 20 was assumed to be 65 vol%.

### (Calculation Example 6)

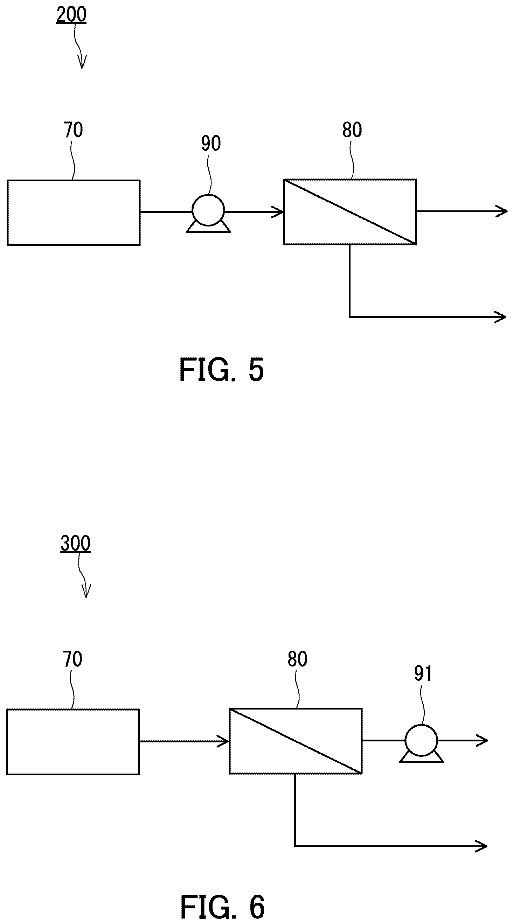

A simulation was performed on the operation of a gas separation system 200 shown in FIG. 5, using the same carbon dioxide separation membrane as that in Calculation Example 1. In detail, in the gas separation system 200, it was assumed that the above carbon dioxide separation membrane would be used as the separation membrane included in a gas separation device 80. The gas separation system 200 included a combustion device 70, the gas separation device 80, and a pressurization device 90. The gas separation system 200 differed from the gas separation system 100 shown in FIG. 1 in that the gas separation system 200 included neither a gas supply unit that supplies the first gas G₁ to the combustion device 70 nor a second gas circulation passage for feeding at least a portion of the second gas G₂ to the combustion device 70.

In the operation of the gas separation device 80 in Calculation Example 6, it was assumed that: the content of carbon dioxide in the second gas G₂ to be supplied to the gas separation device 80 would be less than 10 vol%; and the supply space of the gas separation device 80 would be pressurized by the pressurization device 90.

For Calculation Example 6, the recovery power for carbon dioxide and the required number of membranes were calculated under the following hypothetical conditions. The calculations were performed using Symmetry, process modeling software manufactured by Schlumberger Ltd.

### <Hypothetical Conditions>

The content of carbon dioxide in the third gas G₃ (permeated gas S₁) discharged from the gas separation device 80 is 95 vol%.

The recovery rate of carbon dioxide by the gas separation system 200 is 90 wt%.

### (Calculation Example 7)

A simulation was performed on the operation of a gas separation system 300 shown in FIG. 6, using the same carbon dioxide separation membrane as that in Calculation Example 1. In detail, in the gas separation system 300, it was assumed that the above carbon dioxide separation membrane would be used as the separation membrane included in the gas separation device 80. The gas separation system 300 differed from the gas separation system 200 shown in FIG. 5 in that the gas separation system 300 included, instead of the pressurization device 90, a decompression device 91 that performs decompression from the permeation side of the gas separation device 80.

In the operation of the gas separation device 80 in Calculation Example 7, it was assumed that: the content of carbon dioxide in the second gas G₂ to be supplied to the gas separation device 80 would be less than 10 vol%; and the permeation space of the gas separation device 80 would be decompressed by the decompression device 91.

For Calculation Example 7, the recovery power for carbon dioxide and the required number of membranes were calculated under the following hypothetical conditions. The calculations were performed using Symmetry, process modeling software manufactured by Schlumberger Ltd.

### <Hypothetical Conditions>

The content of carbon dioxide in the third gas G₃ (permeated gas S₁) discharged from the gas separation device 80 is 95 vol%.

The recovery rate of carbon dioxide by the gas separation system 300 is 90 wt%.

For Calculation Examples 1 to 5, the sum of the separation power of the gas separation device 20 and the power consumption of the gas supply unit 40 was considered as the recovery power for carbon dioxide. The power consumption of the gas supply unit 40 was referenced from the electric power consumption of the PVSA oxygen gas generator provided by Shinko AirTech, Ltd. For Calculation Examples 6 to 7, the separation power of the gas separation device 80 was considered as the recovery power for carbon dioxide.

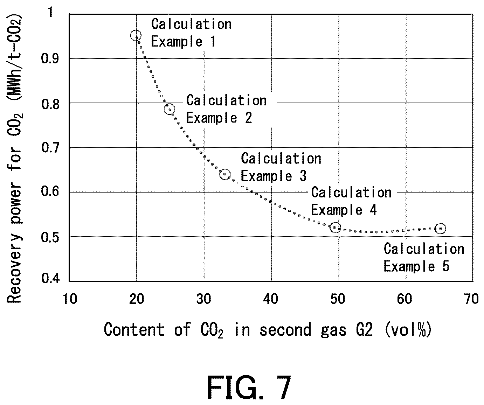

Table 1 shows the simulation results of Calculation Examples 1 to 7. FIG. 7 shows the relationship between the recovery power for carbon dioxide and the content of carbon dioxide in the second gas G₂, based on the simulation results of Calculation Examples 1 to 5.

**[Table 1]**

| | Calculation Example 1 | Calculation Example 2 | Calculation Example 3 | Calculation Example 4 | Calculation Example 5 | Calculation Example 6 | Calculation Example 7 |
|---|---|---|---|---|---|---|---|
| Content of CO₂ in second gas G₂ (vol%) | 20 | 25 | 33 | 50 | 65 | < 10 | < 10 |
| Recovery power for CO₂ (MWh/t-CO₂) | 0.95 | 0.79 | 0.64 | 0.52 | 0.52 | 1.92 | 1.06 |
| Required number of membranes (pieces) | 15 to 16 | 15 to 16 | 15 to 16 | 15 to 16 | 15 to 16 | 15 to 16 | 107 |

As is evident from the comparison of the simulation results between Calculation Examples 1 to 5 and Calculation Examples 6 to 7 in Table 1, operating the gas separation system 100 shown in FIG. 1 would successfully achieve a significant reduction in the recovery power for carbon dioxide. As is evident from the comparison of the simulation results between Calculation Examples 1 to 6 and Calculation Example 7, employing the pressurization method for the gas separation device would successfully achieve a significant reduction in the required number of membranes.

Furthermore, as is evident from FIG. 5, although the recovery power for carbon dioxide tended to decrease as the content of carbon dioxide in the second gas G₂ to be supplied to the gas separation device increased, the recovery power for carbon dioxide remained almost flat after the content of carbon dioxide in the second gas G₂ exceeded 50 vol%. These results suggest that the recovery power for carbon dioxide can be reduced more efficiently particularly in the case where the content of carbon dioxide in the second gas G₂ to be supplied to the gas separation device is 50 vol% or less.

### INDUSTRIAL APPLICABILITY

The gas separation system of the present embodiment is suitable for efficiently recovering carbon dioxide from exhaust gases discharged from combustion devices.

## Claims

1. A gas separation system comprising:
a combustion device that is supplied with a first gas containing oxygen and that discharges a second gas containing carbon dioxide;
a second gas circulation passage for feeding at least a portion of the second gas to the combustion device; and
a gas separation device that separates the second gas to obtain a third gas having a higher content of carbon dioxide than the second gas.

2. The gas separation system according to claim 1, wherein
the gas separation device includes a separation membrane that separates the second gas.

3. The gas separation system according to claim 1, wherein
the combustion device includes a boiler.

4. The gas separation system according to claim 1, wherein
the content of carbon dioxide in the second gas is 20 vol% or more.

5. The gas separation system according to claim 4, wherein
the content of carbon dioxide in the second gas is 70 vol% or less.

6. The gas separation system according to claim 1, wherein
a content of oxygen in the first gas is 20 vol% or more.

7. The gas separation system according to claim 1, further comprising a pressurization device that pressurizes the second gas.

8. The gas separation system according to claim 1, further comprising a gas supply unit that supplies the first gas to the combustion device.

9. The gas separation system according to claim 8, wherein
the gas supply unit includes a gas generation device that generates the first gas from air.
